# EUROPÄISCHE PATENTSCHRIFT

(11) **EP 0 761 311 B1**
(45) Veröffentlichungstag und Bekanntmachung des Hinweises auf die Patenterteilung: **22.07.1998**
(21) Anmeldenummer: 95114319.7
(22) Anmeldetag: 12.09.1995
(51) Int. Cl.: B03B 9/06, B07B 13/00, B07C 5/342

(54) **Verfahren und Vorrichtung zum Identifizieren und Sortieren gebrauchter Gerätebatterien zur Verwertung**
Method and apparatus for recognizing and sorting used batteries for recycling
Procédé et dispositif pour la reconnaissance et le tri de piles usées destinées à être recyclées

(43) Veröffentlichungstag der Anmeldung: 12.03.1997
(73) Patentinhaber: WESTAB Holding GmbH, 47051 Duisburg (DE)
(72) Erfinder: Hamm, Markus, Dr.-Ing.,, D-45147 Essen (DE); Bongardt, jürgen Dr.-Ing. habil., D-4548 Mülheim/Ruhr (DE)
(74) Vertreter: Grosse, Wolfgang, Dipl.-Ing.

(56) Entgegenhaltungen:
- WO-A-92/17791
- CH-A- 664 304
- DE-A- 4 117 029
- DE-A- 4 120 155
- DE-A- 4 303 159
- DE-A- 4 310 862
- DE-A- 4 419 461

## Beschreibung

Die Erfindung betrifft ein Verfahren zum Identifizieren und Sortieren gebrauchter Gerätebatterien zur Verwertung. Gegenstand der Erfindung ist weiterhin auch eine zur Durchführung des Verfahrens geeignete Vorrichtung.

Gebrauchte Gerätebatterien - zu denen im vorliegenden Zusammenhang auch Akkus gerechnet werden - fallen in zunehmenden Mengen an und stellen wegen der in ihnen enthaltenen chemischen Stoffe ein Problem bei der Abfallverwertung und -beseitigung dar. Es sind zwar Verfahren und Vorrichtungen bekannt und in Betrieb, um die Bestandteile alter Batterien aufzubereiten und weitgehend wiederzuverwerten, jedoch sind derartige Verfahren zwangsläufig immer nur auf Batterietypen bestimmter Zusammensetzung abgestellt.

Die von sonstigen Abfällen getrennten Altbatterien bilden im Anlieferungszustand eine Mischung von Typen mit unterschiedlichen elektrochemischen Systemen und Schadstoffgehalten. Um sie in bestehenden Anlagen verwerten zu können, müssen sie entsprechend den elektrochemischen Systemen und Schadstoffen getrennt und der für den jeweiligen Typ vorgesehenen Verarbeitung zugeführt werden.

Bislang werden die anfallenden Batterien durch Sieben vorsortiert und manuell in verschiedene Typklassen aufgeteilt. Um den Sortieraufwand gering zu halten, werden dabei lediglich die NiCd-Akkumulatoren, Knopfzellen und Lithiumbatterien aus den gemischten Batterien ausgesondert. Eine Trennung der quecksilber- und cadmiumfreien Zink-Kohle-Batterien von den Alkali-Mangan-Batterien erfolgt dagegen nicht.

Der Erfindung liegt die Aufgabe zugrunde, den Sortiervorgang für Altbatterien vor deren Aufbereitung zu vereinfachen und genauer zu gestalten, damit die Batterien ihrem jeweiligen Typ entsprechend verarbeitet und verwertet werden können.

Die Lösung der Aufgabe erfolgt erfindungsgemäß durch ein Verfahren mit den Merkmalen des Anspruchs 1 bzw. mit einer Vorrichtung nach Anspruch 9.

Die Bildanalyse erfolgt kann dabei mit Hilfe einer Zeilen- oder Flächenkamera und mindestens eines mit der Kamera verbundenen Computersystems, wobei die Bildmerkmale jeder Batterie mit den Bildmerkmalen bekannter, in dem Computersystem gespeicherter Batterien verglichen werden. Auf diese Weise werden Batterien gleichen äußeren Aussehens erkannt, so daß in Kenntnis der Zusammensetzung dieses Batterietyps eine Trennung nach den verschiedenen elektrochemischen Systemen erfolgen kann. Damit können nicht nur die Batterien der einzelnen Hersteller voneinander getrennt werden, sondern es kann auch eine Trennung der verschiedenen Bautypen erfolgen, deren chemische und sonstige Bestandteile im allgemeinen bekannt sind.

Bei der Bildanalyse wird das von einer Kamera erfaßte Bild jeder Batterie digitalisiert und in ein vereinfachtes, die Batterie charakterisierendes Muster oder einen Kenngrößensatz transformiert, und das Muster oder der Kenngrößensatz wird mit in dem Computersystem gespeicherten Mustern oder Kenngrößensätzen verglichen.

Aus der DE-A-4 303 159 ist ein Verfahren und eine Anordnung zur Entsorgung von Batterien bekannt, bei der eine Zuführeinrichtung die zu entsorgenden Batterien einem Vorratsbehälter entnimmt, um diese in einer bestimmten Lage einer Bilderkennungseinrichtung zuzuführen. Die Bilderkennungseinrichtung analysiert die Signale aus der Bilderkennungseinrichtung mit einer Signalversrbeitungseinrichtung, um die Zusammensetzung der Batterien zu ermitteln.

Ferner ist aus der DE-A-4 120 155 ein Verfahren zum Sortieren von gewerblichen Abfallstoffen bekannt, bei dem eine elektronische Bildverarbeitung zur Mustererkennung und Klassifizierung eingesetzt wird. Entsprechend der Mustererkennung und der Klassifizierung erfolgt eine Sortierung der Abfallstoffe.

Um den Verfahrensaufwand gering zu halten, kann es zweckmäßig sein, die Batterien vor der optischen Erfassung vorzusortieren, wobei die Vorsortierung mechanisch nach der Größe, etwa durch Sieben, und/oder nach dein Gewicht erfolgen kann. Desgleichen ist eine optische Abtastung der äußeren Form, etwa mittels Lichtschranken, möglich, durch die bereits unterschiedliche Größenordnungen erfaßt werden können.

Das Verfahren ermöglicht es auch, mit Hilfe des angeschlossenen Rechners die identifizierten Batterien statistisch zu erfassen und damit den Verfahrensablauf zu überwachen und zu optimieren.

Eine zur Durchführung des Verfahrens geeignete Vorrichtung besteht aus einer Einrichtung zum vereinzelten Zuführen gebrauchter Batterien zu einem optischen Erfassungssystem, einer Zeilen- oder Flächenkamera zum optischen Erfassen jeder Batterie, einem an die Kamera angeschlossenen Computersystem zum Verarbeiten der von der Kamera aufgenommenen Bildinformationen, und einer Sortiereinrichtung zum Aufteilen der zugeführten Batterien entsprechend der von dem optischen Erfassungssystem ermittelten Daten in verschiedene Klassen, wobei Mittel vorhanden sind, mit denen die Bildmerkmale jeder Batterie mit den Bildmerkmalen bekannter, in dem Computersystem gespeicherter Batterien verglichen werden, und das von einer Kamera erfaßte Bild jeder Batterie digitalisiert und in ein vereinfachtes, die Batterie charakterisierendes Muster oder einen Kenngrößensatz transformiert wird, und das Muster oder der Kenngrößensatz mit in dem Computersystem gespeicherten Mustern oder Kenngrößensätzen verglichen wird.

Die Erfindung wird nachfolgend anhand der beigefügten Zeichnungen erläutert. Dabei zeigen:

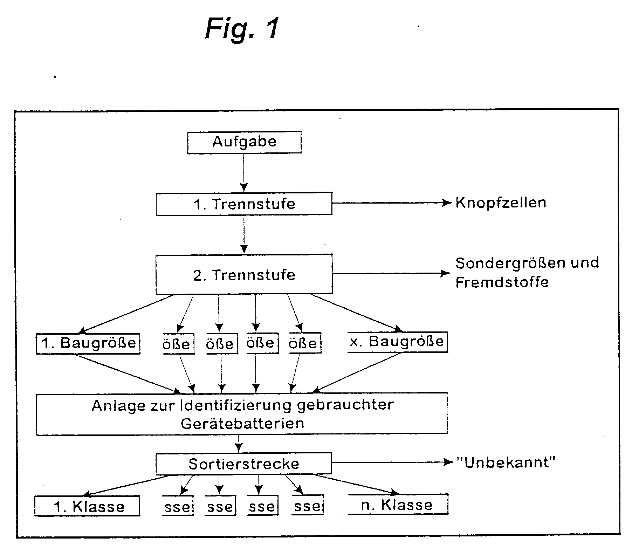

- **Fig. 1**: das erfindungsgemäße Verfahrensablauf-Schema;

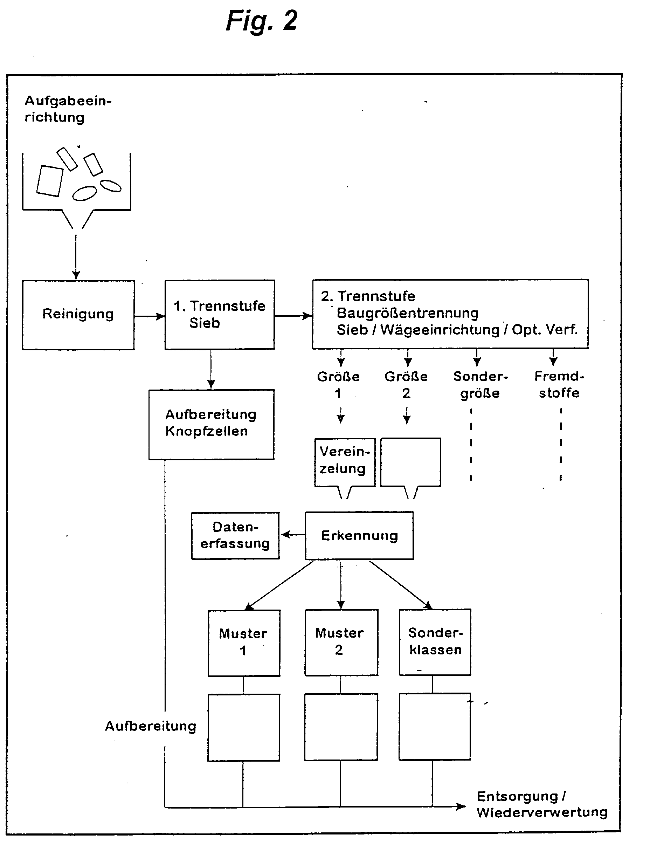

- **Fig. 2**: die Vorrichtung zur Durchführung des Verfahrens in schematischer Darstellung; und
- **Fig. 3**: eine weitere Darstellung der erfindungsgemäßen Vorrichtung.

Die angelieferten Batterien, die ein Gemisch unterschiedlicher Typen und Größen bilden, werden in einen Aufgabebehälter gegeben. Vorher kann eine Reinigung, beispielsweise mittels Wasser und/oder Druckluft erfolgen.

Die Batterien gelangen dann in die erste Trennstufe, die als Siebanlage ausgebildet ist. Hier werden die Knopfzellen ausgesondert, um sie einer Anlage zur Aufarbeitung von quecksilberhaltigen Knopfzellen zuzuführen.

Die in die zweite Trennstufe gelangenden Batterien bilden ein Gemisch aus Rundzellen und prismatischen Batterien wie z.B. Mignon, Mono, Baby, Micro, Flatpack, Normal. Diese werden nach Baugrößen sortiert, wobei bekannte Verfahren und Vorrichtungen zur Anwendung kommen können, wie z.B. Sieb- und/oder Wägeeinrichtungen oder optische, mit Lichstrahlunterbrechung arbeitende Systeme. Dabei werden gleichzeitig Sondergrößen und Fremdstoffe ausgesondert und einer Nachsortierung zugeführt.

Die auf diese Weise gewonnenen Fraktionen werden einzeln oder in Gruppen von dem Identifikationssystem bearbeitet. Die Batterien werden zu diesem Zweck vereinzelt und unter einer Kamera hindurchgeführt. Bei der Kamera handelt es sich um eine Zeilen- oder Flächenkamera, die an ein Computersystem angeschlossen ist.

Das von der Kamera aufgenommene Bild wird zu einem Muster oder Kenngrößensatz transformiert und mit den bekannten Mustern oder Kenngrößensätzen verglichen. Die erfaßte Batterie wird derjenigen bekannten Batterie zugeordnet, die die beste Übereinstimmung der Muster- bzw. Kenngrößensätze aufweist und eine Mindestkorrelation besitzt. Sollte keine ausreichende Ähnlichkeit gefunden werden, so gilt die Batterie als unbekannt und wird einer gesonderten Klasse zugewiesen.

In der nachfolgenden Sortierstrecke wird die geprüfte und erkannte Batterie entsprechend den in dem Computersystem gespeicherten Daten des Herstellers und der Baureihe in eine spezifische Klasse eingeordnet. Die einzelnen Klassen enthalten damit jeweils Batterien eines bestimmten Typs und können der hierfür geeigneten Verarbeitung bzw. Verwertung zugeführt werden.

In die aus Kamera und Rechner bestehende Anlage zur Identifizierung gebrauchter Gerätebatterien werden vor der Inbetriebnahme im Zuge einer Teach-In-Prozedur die Daten sämtlicher Batterietypen eingespeichert und den zu sortierenden Klassen zugeordnet. Die Batterien der Klasse "Unbekannt" werden in regelmäßigen Abständen gesichtet und dabei sich häufende Typen ebenfalls in das System eingespeichert.

Die erfolgten Sortierschritte können vom Rechner gespeichert und aufgelistet werden, um als Grundlage für eine statistische Auswertung zu dienen.

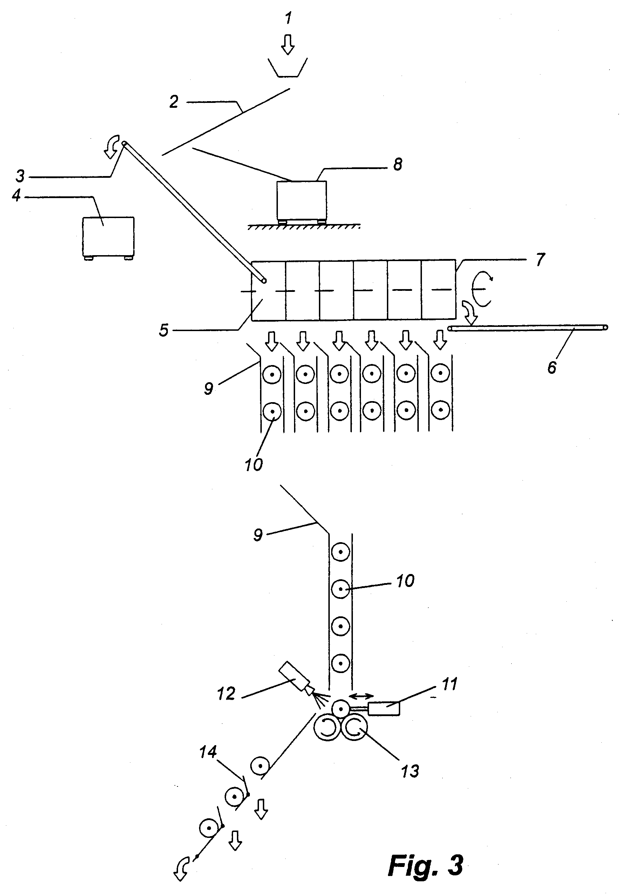

In Fig. 3 ist eine weitere Darstellung der erfindungsgemäßen Vorrichtung gezeigt. Die Batterien werden bei der Aufgabeeinrichtung 1 eingegeben und der Siebrinne 2 zugeführt. Die Siebrinne 2 besitzt Öffnungen, durch die die Knopfzellen durchfallen und in einem Sammelbehälter 8 für Knopfzellen gesammelt werden.

Die restlichen Batterien gelangen im Anschluß an die Siebrinne 2 auf ein Steilförderband 3, bei dem die prismatischen Batterien in Förderrichtung einer Sammeleinrichtung 4 für prismatische Batterien zugeführt werden. Die anderen Batterien bewegen sich entgegen der Förderrichtung aufgrund der Schwerkraft in eine Siebtrommel 7. Die Siebtrommel 7 besteht aus einzelnen Kammern 5, die unterschiedlich große Öffnungen besitzen. Die Siebtrommel 7 dreht sich, so daß die darin befindlichen Batterien in den einzelnen Kammern aussortiert werden. Durch die Drehbewegung werden die Batterien zum Ende der Siebtrommel 7 gefördert. Diejenigen Batterien, die nicht durch die Siebtrommel fallen, werden am Ende der Siebtrommel 7 einem Leseband 6 zugeführt, das zur Bestimmung für Sondergrößen ausgelegt ist.

Die aus den einzelnen Kammern 5 der Siebtrommel 7 gefallenen Batterien 10 werden in passenden Auffangeinrichtungen 9 gesammelt. Am Ende einer Auffangeinrichtung 9 werden die Batterien 10 zur Identifizierung auf zwei Walzen 13 gegeben. Die auf den beiden Walzen 13 befindliche Batterie 10 wird mittels einer Flächenkamera 12 untersucht. Durch eine Drehbewegung der Walzen 13 wird die Batterie 10 dabei von mehreren Seiten untersucht. Nach der Zuordnung der Batterie 10 zu einem bestimmten Batterietyp wird die Batterie 10 über eine Stoßeinrichtung 11 von den Walzen gestoßen, um die Erkennung der nächsten Batterie 10 einzuleiten.

Die von den Walzen 13 gestoßene Batterie 10 wird entsprechend ihrem Typ sortiert. Hierzu kann die Batterie 10 über eine geneigte Bahn rollen, an der mehrere Klappen 14 angeordnet sind. Über das Computersystem wird eine bestimmte Klappe 14 für die entsprechende Batterie 10 geöffnet, um sie dem Sammelbehälter des Bautyps zuzuführen.

## Patentansprüche

1. Verfahren zum Identifizieren und Sortieren gebrauchter, zu entsorgender Gerätebatterien, wobei die Batterien einzeln mit Hilfe optischer Bildanilyseverfahren identifiziert und in Klassen gleichartiger Batterien aufgeteilt werden, **dadurch gekennzeichnet, daß** die Bildanalyse mit Hilfe einer Zeilen- oder Flächenkamera und mindestens eines mit der Kamera verbundenen Computersystems erfolgt, wobei die Bildmerkmale jeder Batterie mit den Bildmerkmalen bekannter, in dem Computersystem gespeicherter Batterien verglichen werden, und das von einer Kamera erfaßte Bild jeder Batterie digitalisiert und in ein vereinfachtes, die Batterie charakterisierendes Muster oder einen Kenngrößensatz transformiert wird, und daß das Muster oder der Kenngrößensatz mit in dem Computersystem gespeicherten Mustern oder Kenngrößensätzen verglichen wird.

2. Verfahren nach Anspruch 1, **dadurch gekennzeichnet, daß** die Batterien vor der optischen Erfassung gereinigt werden.

3. Verfahren nach Anspruch 1 oder 2, **dadurch gekennzeichnet, daß** die Batterien vor der optischen Erfassung vorsortiert werden.

4. Verfahren nach Anspruch 3, **dadurch gekennzeichnet, daß** die Vorsortierung mechanisch nach der Größe erfolgt.

5. Verfahren nach Anspruch 4, **dadurch gekennzeichnet, daß** die Vorsortierung durch Sieben erfolgt.

6. Verfahren nach einem der Ansprüche 3 bis 5, **dadurch gekennzeichnet, daß** die Vorsortierung mechanisch nach dem Gewicht erfolgt.

7. Verfahren nach einem der Ansprüche 4 bis 6, **dadurch gekennzeichnet, daß** die Vorsortierung durch optische Abtastung erfolgt.

8. Verfahren nach einem der Ansprüche 1 bis 7, **dadurch gekennzeichnet, daß** die identifizierten Batterien statistisch erfaßt werden.

9. Vorrichtung zur Durchführung des Verfahrens nach Anspruch 1, **gekennzeichnet durch** eine Einrichtung zum vereinzelten Zuführen gebrauchter Batterien zu einem optischen Erfassungssystem, eine Zeilen- oder Flächenkamera zum optischen Erfassen jeder Batterie, ein an die Kamera angeschlossenes Computersystem zum Verarbeiten der von der Kamera aufgenommenen Bildinformationen, und eine Sortiereinrichtung zum Aufteilen der zugeführten Batterien entsprechend der von dem optischen Erfassungssystem ermittelten Daten in verschiedene Klassen, wobei Mittel vorhanden sind, mit denen die Bildmerkmale jeder Batterie mit den Bildmerkmalen bekannter, in dem Computersystem gespeicherter Batterien verglichen werden, und das von einer Kamera erfaßte Bild jeder Batterie digitalisiert und in ein vereinfachtes, die Batterie charakterisierendes Muster oder einen Kenngrößensatz transformiert wird, und das Minster oder der Kenngrößensatz mit in dem Computersystem gespeicherten Mustern oder Kenngrößensätzen verglichen wird.

10. Vorrichtung nach Anspruch 9, **dadurch gekennzeichnet, daß** dem optischen Erfassungsystem eine Einrichtung zum Vorsortieren der Batterien vorgeschaltet ist.

11. Vorrichtung nach Anspruch 10, **dadurch gekennzeichnet, daß** die Einrichtung zum Vorsortieren als Sieb ausgebildet ist.

12. Vorrichtung nach Anspruch 10 oder 11, **dadurch gekennzeichnet, daß** die Einrichtung zum Vorsortieren als Wägeeinrichtung ausgebildet ist.

13. Vorrichtung nach einem der Ansprüche 10 bis 12, **dadurch gekennzeichnet, daß** die Einrichtung zum Vorsortieren als optisches Abtastsystem ausgebildet ist.

## Claims

1. Process for identifying and sorting used, appliance batteries that are to be disposed of, the batteries being individually identified using an optical image analysis process and separated into classes of batteries of the same type, characterised in that the image is analysed using a linear or surface scanning camera and at least one computer system connected to the camera, the image characteristics of each battery being compared with the image characteristics of known batteries stored in the computer system and the image of each battery recorded by a camera being digitalised and converted into a simplified template characterising the battery or into a set of parameters, and in that the template or the set of parameters is compared with templates or sets of parameters stored in the computer system.

2. Process according to Claim 1, characterised in that the batteries are cleaned before the optical identification stage.

3. Process according to Claim 1 or 2, characterised in that the batteries are pre-sorted before the optical identification stage.

4. Process according to Claim 3, characterised in that the pre-sorting is performed mechanically according to size.

5. Process according to Claim 4, characterised in that the pre-sorting is performed by sieving.

6. Process according to any one of Claims 3 to 5, characterised in that the pre-sorting is performed mechanically according to weight.

7. Process according to any one of Claims 4 to 6, characterised in that the pre-sorting is performed by optical scanning.

8. Process according to any one of Claims 1 to 7, characterised in that the batteries identified are recorded statistically.

9. Apparatus for carrying out the process according to Claim 1, characterised by a device for supplying used batteries individually to an optical identification system, a linear or surface scanning camera for the optical identification of each battery, a computer system connected to the camera for processing the image data recorded by the camera and a sorting device for separating the batteries supplied into different classes according to the data established by the optical identification system, means being present by the use of which the image characteristics of each battery are compared with the image characteristics of known batteries stored in the computer system, the image of each battery recorded by a camera is digitalised and converted into a simplified template characterising the battery or into a set of parameters, and the template or the set of parameters is compared with templates or sets of parameters stored in the computer system.

10. Apparatus according to Claim 9, characterised in that a device for pre-sorting the batteries is arranged upstream of the optical identification system.

11. Apparatus according to Claim 10, characterised in that the pre-sorting device is in the form of a sieve.

12. Apparatus according to Claim 10 or 11, characterised in that the pre-sorting device is in the form of a weighing device.

13. Apparatus according to any one of Claims 10 to 12, characterised in that the pre-sorting device is in the form of an optical scanning system.

## Revendications

1. Procédé d'identification et de tri pour des piles d'appareils usagées à éliminer, les piles étant identifiées une à une à l'aide de procédés optiques d'analyse d'image et étant réparties en classes de piles de même type, caractérisé en ce que l'analyse d'image s'effectue à l'aide d'une caméra à balayage linéaire ou de surface et d'au moins un système informatique raccordé à la caméra, les caractéristiques d'image de chaque pile étant comparées aux caractéristiques d'image de piles connues mémorisées dans le système informatique, et en ce que l'image de chaque pile prise par une caméra est numérisée et transformée en un motif simplifié caractérisant la pile ou en un ensemble de grandeurs caractéristiques, et en ce que le motif ou l'ensemble de grandeurs caractéristiques est comparé à des motifs ou a des ensembles de grandeurs caractéristiques mémorisés dans le système informatique.

2. Procédé selon la revendication 1, caractérisé en ce que les piles sont nettoyées avant l'analyse optique.

3. Procédé selon la revendication 1 ou 2, caractérisé en ce que les piles subissent un tri préalable avant l'analyse optique.

4. Procédé selon la revendication 3, caractérisé en ce que le tri préalable s'effectue mécaniquement selon la taille.

5. Procédé selon la revendication 4, caractérisé en ce que le tri préalable s'effectue par tamisage.

6. Procédé selon l'une des revendications 3 à 5, caractérisé en ce que le tri préalable s'effectue mécaniquement selon le poids.

7. Procédé selon l'une des revendications 4 à 6, caractérisé en ce que le tri préalable s'effectue par détection optique.

8. Procédé selon l'une des revendications 1 à 7, caractérisé en ce que les piles identifiées font l'objet d'une analyse statistique.

9. Dispositif pour exécuter le procédé selon la revendication 1, caractérisé par un dispositif d'alimentation séparée des piles usagées vers un système d'analyse optique, par une caméra à balayage linéaire ou de surface pour l'analyse optique de chaque pile, par un système informatique raccordé à la caméra pour traiter les informations visuelles recueillies par la caméra, et par un dispositif de tri pour répartir les piles introduites en différentes classes en fonction des données déterminées par le système d'analyse optique, des moyens étant prévus, avec lesquels les caractéristiques d'image de chaque pile sont comparées aux caractéristiques d'image de piles connues mémorisées dans le système informatique, et l'image de chaque pile prise par la caméra est numérisée et transformée en un motif simplifié caractérisant la pile ou en un ensemble de grandeurs caractéristiques, et le motif ou l'ensemble de grandeurs caractéristiques est comparé à des motifs ou à des ensembles de données caractéristiques mémorisés dans le système informatique.

10. Dispositif selon la revendication 9, caractérisé en ce que le système d'analyse optique est précédé d'un dispositif de tri préalable des piles.

11. Dispositif selon la revendication 10, caractérisé en ce que le dispositif de tri préalable est conformé en tamis.

12. Dispositif selon la revendication 10 ou 11, caractérisé en ce que le dispositif de tri préalable est conformé en dispositif de pesée.

13. Dispositif selon l'une des revendications 10 à 12, caractérisé en ce que le dispositif de tri préalable est conformé en système de détection optique.
